(19) Europäisches Patentamt / European Patent Office / Office européen des brevets

(11) **EP 3 347 522 B1**

(12) **EUROPEAN PATENT SPECIFICATION**

(45) Date of publication and mention
of the grant of the patent:
**17.06.2020 Bulletin 2020/25**

(21) Application number: **16844801.7**

(22) Date of filing: **06.09.2016**

(51) Int Cl.:
*D21H 11/06* (2006.01)    *D21C 3/06* (2006.01)
*D21C 9/00* (2006.01)    *C08B 16/00* (2006.01)
*D01F 2/06* (2006.01)

(86) International application number:
**PCT/SE2016/050832**

(87) International publication number:
**WO 2017/044030 (16.03.2017 Gazette 2017/11)**

(54) **NOVEL DISSOLVING PULP**

NEUARTIGER FASERZELLSTOFF

NOUVELLE PÂTE DE DISSOLUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2015 SE 1551142**

(43) Date of publication of application:
**18.07.2018 Bulletin 2018/29**

(73) Proprietor: **Domsjö Fabriker AB
891 86 Örnsköldsvik (SE)**

(72) Inventors:
• **SVEDBERG, Anna
894 30 Själevad (SE)**
• **AGNEMO, Roland
892 42 Domsjö (SE)**
• **ELG CHRISTOFFERSSON, Kristina
892 40 Domsjö (SE)**

(74) Representative: **Bjerndell, Per Ingvar
RISE Processum AB
c/o IP Station AB
Järnvägsgatan 2
683 23 Hagfors (SE)**

(56) References cited:
EP-A2- 1 873 302        WO-A1-2013/178608
WO-A2-2012/070072    CA-A- 996 312
CA-A1- 2 568 594        US-A- 2 882 965
US-A1- 2013 296 545

• Simone Fischer-Hübner ET AL: "Security and Privacy in Dynamic Environments : Proceedings of the IFIP TC-11 21st International Information Security Conference (SEC 2006), 22-24 May 2006, Karlstad, Sweden", PROCEEDINGS OF THE IFIP TC-11 21ST INTERNATIONAL INFORMATION SECURITY CONFERENCE, SEC 2006, MAY 2006, KARLSTAD, SWEDEN, 1 January 2006 (2006-01-01), XP055540566, DOI: 10.1007/0-387-33406-8 ISBN: 978-0-387-33405-9 Retrieved from the Internet: URL:http://www.diva-portal.org/smash/get/d iva2:553023/FULLTEXT01.pdf

• STRUNK, P. ET AL.: 'Chemical changes of cellulose pulps in the processing to viscose dope' CELLULOSE CHEM. TECHNOL. vol. 46, no. 9-10, 2012, ISSN 0576-9787 pages 559 - 569, XP055369347

• BORREGA, M. ET AL.: 'Potential of hot water extraction of birch wood to produce high-purity dissolving pulp after alkaline pulping' BIORESOURCE TECHNOLOGY vol. 135, 2013, pages 665 - 671, XP028579660

**Description**

Technical field

The present invention relates to the field of dissolving pulps. In particular it relates to a novel sulfite dissolving pulp suitable as starting material for the production of high tenacity rayon and technical filaments.

Background

Dissolving pulp is a cellulose pulp, with low contents of lignin, hemicellulose and resin which makes it suitable as a raw material for the production of regenerated cellulose. In the present disclosure the term "dissolving pulp" refers to a pulp having a cellulose content of at least 90% (w/w, of bone dry pulp). Dissolving cellulose can be produced by the sulfite process or the prehydrolysis Kraft processes. One disadvantage with the sulfite process, compared to prehydrolysis Kraft processes, is that it results in pulps with a broad molecular weight distribution of cellulose (1, 2). Furthermore, compared to prehydrolysed Kraft pulp, sulfite dissolving pulps generally have a higher content of hemicellulose. Both these features have been considered as negative for the tenacity of regenerated cellulose produced from the pulp. Therefore, sulfite dissolving pulp has generally been considered unsuitable for production of regenerated cellulose with high tenacity applications.

In the production of regenerated cellulose, the cellulose is dissolved in a solvent to form a cellulose dope which is processed to regenerate the cellulose fibers in different forms. There are a number of different methods of producing regenerated cellulose known in the art, including the viscose process, the lyocell process, the cellulose acetate process and the cellulose carbamate process.

The viscose process has been used industrially for many years for the production of rayon fibers, used in the textile industry. One advantage with the method is that it is possible to use wood as a starting material whereas several other methods need lignin-free cellulose as starting material. The viscose process can be divided into the following steps:

- Mercerization
- Pre-ripening
- Xanthation
- Dissolving
- Ripening and
- Regeneration

In the Mercerization step the cellulose is typically soaked in 17-20% NaOH solution at room temperature for a few hours such that the cellulose is converted into alkali-cellulose. During this process the cellulose fibers are activated by the swelling of the fibers leading to an increased accessibility of the cellulose fibers to the chemicals in the solvent (e.g. carbon disulfide) such that the reactivity of the cellulose fibers with the chemical are increased. In addition to the increased accessibility, the breakage of intra- and inter molecular hydrogen bounds in and between the cellulose chains caused by the alkaline conditions also contributes to the increased reactivity of the swelled fibers. In the pre-ripening step, the alkali-cellulose will be degraded into desired degree of polymerization through depolymerization reaction with the oxygen in the air. The reaction can be catalyzed by cobalt or manganese. In the xanthation step, the pre-riped alkali-cellulose is mixed with carbon disulfide ($CS_2$) resulting in a cellulose xanthate derivative which is dissolved in a dilute sodium hydroxide solution to from a cellulose xanthate solution (viscose solution). This is followed by a ripening step where some of the alkali xanthate groups are removed from the cellulose. In the regeneration process the cellulose xanthate is applied to a coagulation bath. Typically, this involves pumping of the cellulose xanthate through spinnerets, into an acid bath where cellulose is regenerated in the form of long filaments. In this process the $CS_2$ will be released which enables recycling of the chemical. After this, the cellulose is stretched, washed and then undergoes further processing depending on the intended use of the fibers.

Viscose fibers produced in the regeneration of cellulose can either be used for the production of staple fibers or filaments, such as filament yarn. In the production of staple fibers, the viscose fibers are cut into short pieces after the spinning bath. These short fibers, which are each about 4 cm long, can be spun into textile yarns or processed into non-woven products. In contrast, filament yarns are winded up into very long continuous fibers which due to their strength is highly suitable as technical filaments e.g. in tire cords and in other applications where high tenacity fibers are requested.

The production of high tenacity fibers differs in some aspects from the production of viscose fibers used for production of staple fibers. For example, a higher concentration of carbon disulfide can be used in the xanthation step and the stretching of the fibers can be performed differently.

Canadian patent application CA 2 568 594 A1 relates to a method for producing a dissolving pulp comprising alkaline extraction, more specifically the pulp is obtained from hardwood by acid bisulfite pulping. Lye is recycled and the content of beta cellulose is reduced in at least a portion of the recycled lye prior to new treatment. A pulp viscosity of 500-800 ml/g is mentioned in connection with cellulose acetate production.

Canadian patent CA 996 312 A relates to a process for producing refined and bleached pulp, comprising acid sulfite digestion and hot caustic extraction refining with sodium hydroxide.

Degree project report *Hot caustic extraction of spruce sulfite dissolving pulp* by I. P. Nebamoh, Karlstad university, Faculty of Technology and Science, Department of Chemical engineering, 30.06.2012, relates to optimization of the hot caustic extraction stage on a sulfite dissolving pulp.

Summary of the present disclosure

It is known in the art that the characteristics of pulp can influence the tenacity of regenerated cellulose fibers and filaments produced from the pulp. Thus, production of high tenacity fibers and technical filaments generally needs a pulp having these desired characteristics. In particular pre-hydrolysed Kraft pulp with low hemicellulose content (i.e. high R18) values have been described as suitable starting material for production of high tenacity fibers and technical filaments. Sulfite pulps have been regarded as less suitable for production of high tenacity fibers and technical filaments, partly due to its high content of hemicellulose and to a broad molecular weight distribution of cellulose. It is generally accepted in the art that, in order to get optimum strength for the regenerated fibers, the polydispersity (PD) shall be as low as possible, i.e. as close to 1 as possible.

The present inventors have surprisingly discovered that a novel sulfite pulp can be produced, which despite its high content of hemicellulose and relatively broad molecular weight distribution gives rise to regenerated cellulose fibers and filaments of remarkably high strength. The PD of this pulp can be as high as 15; the R18 value as low as 93% and the R10 value as low as 92%. Compared to known sulfite dissolving pulps, this pulp has a relatively high viscosity and a lower proportion of cellulose chains having a molecular weight below 25 KDa. It also have a high content of cellulose chains having a molecular weight above 100 KDa compared to other known sulfite dissolving pulps. Thus, a first aspect of the present invention therefore relates to a sulfite dissolving pulp having:

a) a viscosity of 700-1000 ml/g;
b) a R18 value of 93-95.5%;
c) a R10 value in of 92-94%;
d) a PD of 9-15, such as 12-15;
e) a proportion of cellulose chains having a molecular weight below 25 KDa of less than 8% (w/w), such as less than 7% (w/w);
f) a proportion of cellulose chains having a molecular weight above 100 KDa of above 75% (w/w), preferably above 78% (w/w), most preferably above 80% (w/w).

A second aspect of the present invention relates to use of a sulfite dissolving pulp according to the first aspect in a viscose process for the production of filaments or viscose staple fibers having a wet tenacity of at least 1.9 cN/dtex.

A third aspect of the present invention relates to a method for production of a sulfite dissolving pulp according the first aspect comprising the following steps:

i) pulping wood chips from soft wood in a sulfite cook such that a pulp having a viscosity of 700-900 ml/g is obtained.
ii) hydrolyzing the hemicellulose present in the pulp obtained in step i) by exposing the pulp to NaOH such that a pulp having an R18 value of 93-95.5% is obtained

Definitions:

*Dissolving pulp:* A pulp having a cellulose content of at least 90% (w/w, of bone dry pulp).

*Sulfite pulp:* A pulp obtained by the sulfite pulping process.

*Pulp viscosity;* The pulp viscosity is a measure of the average chain length *(degree of polymerization)* of cellulose. The viscosity is determined after dissolving the pulp in a suitable solvent such as a cupriethylene diamine solution. Methods for measuring pulp viscosity are well known for the skilled person. One such method is the SCAN-CM 15:88 method (3).

*Degree of polymerization (DP):* Average number of glucose units that make up the cellulose polymers in the pulp.

*R18 value:* The percentage of a pulp which is not soluble in a 18% sodium hydroxide solution at 20ºC for 60 minutes reaction time (ISO 699:1982).

*R10 value:* The percentage of a pulp which is not soluble in a 10% sodium hydroxide solution at 20ºC for 60 minutes reaction time (ISO 699:1982).

$M_n$ *value:* Number average molar mass is the arithmetic mean or average of the molecular masses of the individual macromolecules. It can be determined by measuring the molecular mass of n polymer molecules, summing the masses, and dividing by n:

$$M_n = \sum Ni * Mi / \sum Ni$$

*$M_w$ value :* Weight average molecular weight. The mass average molar mass is calculated by

$$M_w = \sum_i N_i * M_i * M_i / \sum_i N_i * M_i$$

where $N_i$ is the number of molecules of molecular mass $M_i$.

Polydispersity (PD): The polydispersity (PD) is a measure of the distribution of molecular mass in a given polymer sample. The PD is the weight average molecular weight divided by the number average molecular weight. It indicates the distribution of individual molecular masses in a batch of polymers. The PD has a value equal to or greater than 1. As the polymer chains approach uniform chain length, the PD approaches 1. In the art the polydispersity can also be referred to as Polydispersity index (PDI)

Detailed description

Compared to for example prehydrolyzed Kraft pulp, sulfite dissolving pulp have been regarded as less suitable for production of high tenacity fibers and technical filaments, partly due to its high content of hemicellulose and to a broad molecular weight distribution of cellulose. The present inventors have discovered that a novel dissolving sulfite pulp can be obtained which, despite a relatively high PD and high content of hemicellulose, is suitable for high tenacity applications.

As can be seen in table 1, compared to a prehydrolyzed Kraft pulp ("high alpha pulp"), the novel pulp ("high viscosity sulfite pulp") has a relatively high PD and low R10 and R18 values. In fact, these values are similar to the values observed for the standard sulfite pulp,"standard viscosity sulfite pulp". Thus one would expect that the novel "high viscosity sulfite pulp" would be less suitable for production of high tenacity rayon and technical filaments. However, the present inventors surprisingly demonstrate that the dry tenacity of filaments produced from the novel "high viscosity sulfite pulp" is much higher than for filaments produced from the reference standard viscosity sulfite pulp. In fact it is even higher than for filaments produced from a high alpha pulp which is widely used for high tenacity applications. Also the wet tenacity of filaments produced from the novel pulp is higher than for the ones produced from the standard viscosity sulfite pulp and very close to the ones produced from high alpha pulp, see table 2.

Thus, by changing a few parameters in the production process, such as cooking to a higher viscosity and modifying the E-step, a dissolving pulp suitable for high tenacity applications can be obtained from a sulfite pulp mill. This can be achieved without the need of reducing the hemicellulose content to R18 values above 93% or by changing the process such that a low PD, such as below 9, can be obtained. Thereby a pulp suitable for high tenacity applications can be obtained at a comparably low cost.

Thus a first aspect of the present invention relates to a sulfite dissolving pulp having

a) a viscosity of 700-1000 ml/g;
b) a R18 value of 93-95.5%;
c) a R10 value in of 92-94%;
d) a PD of 9-15, such as 12-15;
e) a proportion of cellulose chains having a molecular weight below 25 KDa of less than 8% (w/w), such as less than 7% (w/w);
f) a proportion of cellulose chains having a molecular weight above 100 KDa of above 75% (w/w), preferably above 78% (w/w), most preferably above 80% (w/w).

In one embodiment the proportion of cellulose chains having a molecular weight below 25 KDa is 5.0 to 8.0% (w/w) such as 6.5 to 7.5% (w/w). In one embodiment the sulfite dissolving pulp is further having:

g) a proportion of cellulose chains having a molecular weight below 10 KDa of less than 4% (w/w). In one embodiment the sulfite dissolving pulp is having a proportion of cellulose chains having a molecular weight below 10 KDa of 2 % (w/w) to 4% (w/w). In one embodiment the proportion of cellulose chains having a molecular weight above 100 KDa is 78% (w/w) to 82 % (w/w). In one embodiment the sulfite dissolving pulp has:
h) a proportion of cellulose chains having a molecular weight between 25 KDa and 100 KDa of 10-16% (w/w), preferably 12-14% (w/w). The viscosity of the pulp can be measured using the SCAN-CM 15:88 method and thus in one embodiment the viscosity is measured using the SCAN-CM 15:88 method. In one embodiment the R18 and R10 values are measured using the standard method ISO 699:1982.

Surprisingly the inventors have demonstrated that the novel pulp, despite a relatively high PD and high content of hemicellulose, is suitable for high tenacity applications. In particular the inventors demonstrate that the novel pulp is suitable for the production of technical filaments. However the pulp is also suitable for production of high tenacity staple fiber. Thus a second aspect of the present invention relates to use of a sulfite dissolving pulp according to the first aspect in a viscose process for the production of filaments or viscose staple fibers having a wet tenacity of at least 1.9 cN/dtex. In embodiment the filaments or viscose staple fibers have a dry tenacity of at least 3.0 cN/dtex. The novel sulfite dissolving pulp disclosed in the present application can be produced without any major changes in the process. Importantly, the process does not need to be adapted to reduce the hemicellulose content to such low levels that the R18 value is above 96% as in known pulps suitable for high tenacity applications. Neither does the process need to be adapted to reduce the PD value to below 5 as in known pulps suitable for high tenacity applications. The novel sulfite dissolving pulp according to the present application can be produced by a method which involves pulping of wood chips from soft wood in a sulfite cook to a viscosity of 700-900 ml/g and thereafter hydrolyzing the hemicellulose present in the pulp by exposing the pulp to NaOH such that the R18 value of the obtained pulp is 93-95.5%.

Therefore, a third aspect of the present invention relates to a method according to claim 6 for production of a sulfite dissolving pulp according the first aspect.

In one embodiment the method further comprises a step
iii) bleaching the pulp obtained in step ii) in the presence of hydrogen peroxide such that a bleached pulp is obtained.

In one embodiment the method further comprises a step of
iv) dewatering the bleached pulp obtained in step iii) such that a dewatered pulp is obtained.

In one embodiment the method further comprises a step of:
v) drying the dewatered pulp obtained in step iv) such that a dried pulp is obtained.

In the invention, step ii) is performed using 60-90 kg NaOH per tonne of bone dry pulp, at a temperature of 85-95°C for 80-100 minutes.

In one embodiment the method further comprises a washing step where the pulp obtained in step i) is washed with water prior to step ii).

In one embodiment the method is further comprising a washing step where the bleached pulp obtained in step iii) is washed with water prior to step iv).

**Examples**

Example 1

Softwood chips where cooked in a sulfite cook to viscosity of 800 ml/g. The pulping step was followed by an E-Step where the obtained pulp was treated with NaOH at a temperature of 85-95°C for 90 minutes. 75 kg of NaOH per tonne of bone dry pulp was used in the E-step. The other steps in the process were standard processes for sulfite pulping well known to the skilled person. For example the pulp was bleached in the presence of hydrogen peroxide in a P-step and dewatered and dried by methods well known in the art.

R10 and R18 of the obtained pulp were measured by the standard method ISO 699:1982. The molecular weight distribution of the obtained pulp was analyzed using the chromatographic system PL-GPC 210 (*Polymer Laboratories*), with refractive index detector. Colums: Guard column Mixed-A 20 $\mu$m, 7.5*50 mm and 2 Mixed-A 20 $\mu$m, 300*7.5 mm from Polymer Laboratories, connected in series.
Mobile phase: 0.5% (w/v) LiCl/DMAc(N,N-Dimethylacetamide).
Flow rate: 1 ml/min.
Temperature: 70°C.
Injection volume: 100 $\mu$l.
Calibration standards: Pullulan polysaccharide standards from Polymer Lab with molecular masses of 708000, 344000, 200000, 107000, 47100, 21100, 9600, and 6100 dalton.
Calculation program: Cirrus GPC software from Polymer Lab.
Sample dissolution: 25 g of pulp is solvent exchanged three times with five ml of methanol for 30 minutes followed by three times for 30 minutes with DMAc. The excess of DMAc is then removed and 5 ml of 8% (w/v) LiCl/DMAc is added, and left overnight at room temperature with mild magnetic stirring. Before analysis this sample is diluted with 20 ml of DMAc.

$M_w$, $M_n$ and PD was calculated by the software. The proportion of cellulose chains having a molecular weight below 20 KDa (w/w) was calculated using the program Cirrus GPC, Polymer lab.

R10, R18, PD, $M_w$, $M_n$ and the proportion of cellulose chains having a molecular weight below 25 KDa (w/w) of the obtained pulp is shown in table 1; "high viscosity sulfite pulp". The same values for two reference pulps; a standard sulfite pulp, "Standard viscosity sulfite pulp", (Domsjö Fabriker) and a prehydrolyzed Kraft pulp, "High alpha pulp" are also shown.

Table 1

|  | High viscosity sulfite pulp | High alpha pulp | Standard viscosity sulfite pulp. |
|---|---|---|---|
| R10 | 92.0 | 98.4 | 93 |
| R18 | 94.5 | 99.1 | 94.8 |
| PD | 14 | 4 | 11 |
| $M_w$ | 908508 | 447154 | 549987 |
| $M_n$ | 62791 | 100918 | 51285 |
| MW > 100 KDa | 80.0 | 77.9 | 71.7 |
| MW between 25 KDa and 100 KDa | 13.0 | 18.0 | 18.7 |
| Mw between 25kDa and 10kDa | 3.4 | 2.9 | 4.6 |
| Mw between 10kDa and 0,1 kDa | 3.5 | 1.2 | 5.0 |

Example 2

Filaments were produced from the three pulps described in example 1 by a commercial standard method for technical fibre production. Wet tenacity and dry tenacity of three types of filament were investigated by the standardized method SSE-ISO 5079.

As can be seen in table 2, the dry tenacity of filaments produced from the novel pulp "High viscosity sulfite pulp" is much higher than for the filaments produced from the standard viscosity sulfite pulp and even higher than for the filaments produced from high alpha pulp. Also the wet tenacity of the filaments produced from the novel pulp is higher than for the filaments produced from the standard viscosity sulfite pulp and very close to the ones produced from the high alpha pulp. Also wet elongation are on same level in filaments from high viscosity pulp as from high alpha pulp; 24.2 respectively 24.5. These results are surprising since the R18, R10 and PD values of the novel pulp is much higher compared to pulps that previously have been used for high tenacity applications, see table 1.

Table 2

| Sample | Dry | | | Wet | | |
|---|---|---|---|---|---|---|
|  | Elong. [%] | Ten. [cN/dtex] | Ten. stdv [cN/tex] | Elong. [%] | Ten. [cN/dtex] | Ten. stdv [cN/tex] |
| High viscosity sulfite pulp | 13.6 | 5.23 | 2.46 | 24.2 | 3.87 | 1.81 |
| High alpha pulp | 13.3 | 4.74 | 4.87 | 24.5 | 3.99 | 3.56 |
| Standard viscosity sulfite pulp. | 13.1 | 4.45 | 2.57 | 21.2 | 3.49 | 2.03 |

REFERENCES

1. Christoffersson (2005) "Dissolving pulp : Multivariate Characterisation and Analysis of Reactivity and Spectroscopic Properties" Ph.D thesis Umeå University.

2. Sixta, et al "Evaluation of new organosolv dissolving pulps. Part I: Preparation, analytical characterization and viscose processability". (2004) Cellulose 11(1): 73-83

3. SCAN Test Methods, Scandinavian Pulp, Paper and Board Committee, Sweden, (1988).

**Claims**

1. A soft wood sulfite dissolving pulp having

   a) a viscosity of 700-1000 ml/g, measured using the SCAN-CM 15:88 method;
   b) a R18 value of 93-95.5%, measured using the standard method ISO 699:1982;
   c) a R10 value in of 92-94%, measured using the standard method ISO 699:1982;
   d) a PD of 9-15;
   e) a proportion of cellulose chains having a molecular weight below 25 KDa of less than 8% (w/w); and
   f) a proportion of cellulose chains having a molecular weight above 100 KDa of above 75% (w/w).

2. A sulfite dissolving pulp according to any of the previous claims wherein the proportion of cellulose chains having a molecular weight below 25 KDa is 5.0 to 8.0% (w/w).

3. A sulfite dissolving pulp according to any of the previous claims wherein the proportion of cellulose chains having a molecular weight above 100 KDa is 78% (w/w) to 82% (w/w).

4. Use of a sulfite dissolving pulp according to any of the previous claims in a viscose process for the production of filaments or viscose staple fibers having a wet tenacity of at least 1.9 cN/dtex

5. Use according to claim 4 wherein the filaments or viscose staple fibers have a dry tenacity of at least 3.0 cN/dtex

6. Method for production of a sulfite dissolving pulp according to claims 1-3 comprising the following steps

   i) pulping wood chips from soft wood in a sulfite cook such that a pulp having a viscosity of 700-900 ml/g is obtained, when measured using the SCAN-CM 15:88 method.
   ii) hydrolyzing the hemicellulose present in the pulp obtained in step i) by exposing the pulp to NaOH such that a pulp having an R18 value of 93-95.5%, measured using the standard method ISO 699:1982, is obtained, step ii) being performed using 60-90 kg NaOH per tonne of bone dry pulp, at a temperature of 85-95°C for 80-100 minutes.

**Patentansprüche**

1. Ein weicher Holz-Sulfit-Auflöse-Zellstoff, aufweisend

   a) eine Viskosität von 700 - 1000 ml / g, gemessen unter Verwendung des SCAN - CM 15 : 88 Verfahrens;
   b) einen R18 - Wert von 93 - 95,5 %, gemessen unter Verwendung des Standard Verfahrens ISO 699 : 1982;
   c) einen R10 - Wert in von 92 - 94 %, gemessen unter Verwendung des Standard Verfahrens ISO 699 : 1982;
   d) eine PD von 9 - 15;
   e) einen Anteil an Celluloseketten, aufweisend ein Molekulargewicht unter 25 KDa von weniger als 8 % (Gew. / Gew.); und
   f) einen Anteil an Celluloseketten, aufweisend ein Molekulargewicht über 100 KDa von über 75 % (Gew. / Gew.).

2. Sulfit-Auflöse-Zellstoff nach einem der vorhergehenden Ansprüche, wobei der Anteil an Celluloseketten, aufweisend ein Molekulargewicht unter 25 KDa, 5,0 bis 8,0 % (Gew. / Gew.) beträgt.

3. Sulfit-Auflöse-Zellstoff nach einem der vorhergehenden Ansprüche, wobei der Anteil an Celluloseketten, aufweisend ein Molekulargewicht über 100 kDa, 78 % (Gew. / Gew.) bis 82 % (Gew. / Gew.) beträgt.

4. Verwendung eines Sulfit-Auflöse-Zellstoffs nach einem der vorhergehenden Ansprüche in einem Viskoseverfahren für die Herstellung von Filamenten oder Viskose-Stapelfasern, aufweisend eine Nasszugfestigkeit von wenigstens 1,9 cN / dtex

5. Verwendung nach Anspruch 4, wobei die Filamente oder Viskose-Stapelfasern eine Trockenzugfestigkeit von wenigstens 3,0 cN / dtex aufweisen.

6. Verfahren zur Herstellung eines Sulfit-Auflöse-Zellstoffs nach Ansprüchen 1 - 3, umfassend die folgenden Schritte

i) Aufschließen von Holzspänen aus weichem Holz in einem Sulfitkocher, so dass ein Zellstoff, der eine Viskosität von 700 - 900 ml / g aufweist, erhalten wird, wenn gemessen unter Verwendung des SCAN - CM 15 : 88 Verfahrens.

ii) Hydrolysieren der Hemicellulose, die in dem in Schritt i) erhaltenen Zellstoff vorhanden ist, indem der Zellstoff NaOH ausgesetzt wird, so dass ein Zellstoff, der einen R18 - Wert von 93 - 95,5 % aufweist, gemessen unter Verwendung des Standard Verfahrens ISO 699 : 1982, erhalten wird, wobei Schritt ii) durchgeführt wird unter Verwendung von 60 - 90 kg NaOH pro Tonne knochentrockenen Zellstoffs, bei einer Temperatur von 85 - 95 °C für 80 - 100 Minuten.

**Revendications**

1. Une pâte dissolvante de bois tendre, au sulfite, ayant

a) une viscosité allant de 700 à 1000 ml/g, mesurée par le procédé SCAN-CM 15 :88 ;
b) une valeur R18 allant de 93 à 95,5%, mesurée selon la méthode normalisée ISO 699:1982 ;
c) une valeur R10 allant de 92 à 94%, mesurée selon la méthode normalisée ISO 699:1982 ;
d) une DP allant de 9 à 15 ;
e) une proportion de chaînes de cellulose ayant un poids moléculaire inférieur à 25 KDa de moins de 8 % (p/p) ; et
f) une proportion de chaînes de cellulose ayant un poids moléculaire supérieur à 100 KDa supérieure à 75 % (p/p).

2. Une pâte dissolvante au sulfite selon l'une quelconque des revendications précédentes, dans laquelle la proportion de chaînes de cellulose ayant un poids moléculaire inférieur à 25 KDa est de 5,0 à 8,0% (p/p).

3. Une pâte dissolvante au sulfite selon l'une quelconque des revendications précédentes, dans laquelle la proportion de chaînes de cellulose ayant un poids moléculaire supérieur à 100 KDa est de 78% (p/p) à 82% (p/p).

4. Utilisation d'une pâte dissolvante au sulfite selon l'une quelconque des revendications précédentes dans un procédé de viscose pour la production de filaments ou de fibres discontinues de viscose ayant une ténacité à l'état humide d'au moins 1,9 cN/dtex.

5. Utilisation selon la revendication 4, dans laquelle les filaments ou les fibres discontinues de viscose ont une ténacité à sec d'au moins 3,0 cN/dtex.

6. Procédé de production d'une pâte dissolvante au sulfite selon les revendications 1 à 3 comprenant les étapes suivantes :

i) mise en pâte de copeaux de bois à partir de bois tendre dans une cuisson au sulfite de telle sorte qu'une pâte ayant une viscosité allant de 700 à 900 ml/g soit obtenue, mesurée en utilisant le procédé SCAN-CM 15 :88.
ii) hydrolyse de l'hémicellulose présente dans la pâte obtenue à l'étape i) en exposant la pâte à du NaOH de manière à obtenir une pâte ayant une valeur R18 allant de 93 à 95,5 %, mesurée en utilisant la méthode normalisée ISO 699:1982, l'étape ii) étant mise en œuvre en utilisant de 60 à 90 kg de NaOH par tonne de pâte complètement sèche, à une température allant de 85 à 95°C pendant 80 à 100 minutes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2568594 A1
- CA 996312 A

**Non-patent literature cited in the description**

- **I. P. NEBAMOH.** Faculty of Technology and Science, Department of Chemical engineering. Karlstad university, 30 June 2012
- **CHRISTOFFERSSON.** Dissolving pulp : Multivariate Characterisation and Analysis of Reactivity and Spectroscopic Properties. *Ph.D thesis Umeå University,* 2005
- **SIXTA et al.** Evaluation of new organosolv dissolving pulps. Part I: Preparation, analytical characterization and viscose processability. *Cellulose,* 2004, vol. 11 (1), 73-83
- *SCAN Test Methods, Scandinavian Pulp, Paper and Board Committee,* 1988